Europäisches Patentamt

European Patent Office

Office européen des brevets

(11) Veröffentlichungsnummer: **0 345 619**
**A2**

## (12) EUROPÄISCHE PATENTANMELDUNG

(21) Anmeldenummer: **89109793.3**

(22) Anmeldetag: **31.05.89**

(30) Priorität: **06.06.88 DE 3819570**

(43) Veröffentlichungstag der Anmeldung:
**13.12.89 Patentblatt 89/50**

(84) Benannte Vertragsstaaten:
**BE CH DE ES FR GB IT LI LU NL SE**

(51) Int. Cl.⁴: **B65G 13/00 , B65G 13/02**

(71) Anmelder: **SCHERING AKTIENGESELLSCHAFT**
**Berlin und Bergkamen**
**Müllerstrasse 170/178 Postfach 65 03 11**
**D-1000 Berlin 65(DE)**

(72) Erfinder: **Kosikowski, Thomas**
**Ginsterweg 6**
**D-8501 Burgthann(DE)**

(54) **Verfahren zum Transportieren von plattenförmigen Teilen stark unterschiedlicher Dicke.**

(57) Die Erfindung betrifft ein Verfahren zum Transportieren von plattenförmigen Gegenständen, insbesondere Leiterplatten, zu deren Behandlung in Horizontal-Durchlaufanlagen, bei stark unterschiedlicher Dicke der Platten und einer Führung der Platten beim Durchlauf zwischen unteren und oberen Rollen, wobei die obere Rolle von der jeweils zugeordneten unteren Rolle aus über eine Geradeverzahnung angetrieben wird, dadurch gekennzeichnet, das die Verzahnung zwischen den unteren und oberen Rollen mit einem unveränderlichen Achsabstand ausgeführt ist,wobei die Lagerung der oberen Rolle mit deren Zahnrad in einer Kulisse in Form eines Kreisbogens geführt ist, der Mittelpunkt des Kreisbogens im Lager-Mittelpunkt des unteren Zahnrades liegt und der Radius des Kreisbogens dem Achsabstand der Verzahnung entspricht sowie eine Anordnung zur Durchführung des Verfahrens.

EP 0 345 619 A2

# VERFAHREN ZUM TRANSPORTIEREN VON PLATTENFÖRMIGEN TEILEN STARK UNTERSCHIEDLICHER DICKE

Die Erfindung betrifft ein Verfahren zum Transportieren von plattenförmigen Gegenständen, insbesondere Leiterplatten, gemäß dem Oberbegriff des Anspruchs 1 sowie eine Anordnung zur Durchführung des Verfahrens gemäß Anspruch 8.

In den Horizontal-Durchlaufanlagen werden Leiterplatten verschiedenen Bearbeitungen unterzogen, zum Beispiel Bürsten, Ätzen, Reinigen, Spülen usw.

Bei der Bearbeitung werden die Leiterplatten in horizontaler Lage durch die Behandlungsstationen transportiert, wobei eine solche Behandlungslinie mindestens aus einer Aktivstation und ein oder zwei Spülstationen besteht.

Der Transport der Platten erfolgt mittels einer Vielzahl von Rollen, die durchgehend zylindrisch sein, oder aus einer dünnen Achse mit einzelnen aufgesteckten Scheiben bestehen können. Die Rollen werden durch eine Antriebseinrichtung in Rotation versetzt.

Zur Behandlung der Leiterplatten mit Flüssigleiten, die oben und unten gegen die Platten gespritzt werden, müssen die Platten durch obere und untere Rollen geführt werden.

Würden sie nur auf unteren Rollen aufliegen, konnen sie durch die Einwirkung des Spritzdrucks von diesen Transportelementen abgehoben werden, wodurch Störungen des Transportvorganges entstehen. Zur Gewährleisutung eines sicheren Transports müssen die oberen Transportelemente ebenfalls angetrieben sein.

Bei den bisher vorwiegend verwendeten Lösungen sind die unteren Rollen von einer in Längsrichtung der Anlage verlaufenden Antriebswelle über Kegelradpaare angetrieben. Der Antrieb zu den oberen Rollen geschieht über eine Geradverzahnung an mindestens einem Ende der Rollen. Dabei sind die Lagerungen der oberen Rollen in vertikalen Schlitzen geführt, damit sich der Achsabstand den unterschiedlichen Dicken der zu behandelnden Leiterplatten anpassen kann.

Durch das Eigengewicht der oberen Transportelemente werden diese ständig nach unten gedrückt.

Die Gestaltung des Zahnradantriebes zwischen den unteren und oberen Rolen wird vorzugsweise so gewählt, daß sich bei der vorwiegend auftretenden Dicke der zu behandelnden Leiterplatten der rechnerisch ideale Achsabstand ergibt.

Für alle anderen Plattendicken, oder im Leerbetrieb, stellt sich jedoch ein falscher Achsabstand ein und die Verzahnung arbeitet nicht optimal.

Trotzdem genügt diese technische Lösung für die gegebene Anwendung üblicherweise den Anforderungen.

Neuerdings werden jedoch die Unterschiede zwischen den dünnsten und dicksten zu behandelnden Leiterplatten immer größer. Insbesondere wegen der immer mehr zum Einsatz kommenden Multilayer, sollen in den Maschinen sowohl folienartige wie auch sehr dicke Platten behandelt werden können. Während bisher die maximale Dicke etwa bei ca. 5 mm lag, wird nun gefordert, daß zukünftig auch Platten bis zu etwa 10 mm Dicke behandelbar sind. Dies ist aber mit der beschriebenen Ausführung des Antriebs zwischen den unteren und oberen Rollen nicht mehr möglich. Damit bei den dicksten Platten die Zahnräder überhaupt noch im Eingriff waren, müßte ein entsprechend großes Modul der Verzahnung gewählt werden. Dies ist jedoch nicht möglich, weil dann bei den gegebenen maximal zulässigen Außen- beziehungsweise Teilkreisdurchmessern die kleinste mögliche Zähnezahl nicht erreicht wird.

Der Erfindung liegt die Aufgabe zugrunde, für die beschriebenen Anlagen die Behandlung von sehr unterschiedlichen Plattendicken zu ermöglichen.

Diese Aufgabe wird erfindungsgemäß durch ein Verfahren gemäß dem kennzeichnenden Teil des Patentanspruchs gelöst.

Weitere Ausgestaltungen der Erfindung sind den Kennzeichnungsteilen der Unteransprüche zu entnehmen.

Gegenstand der Erfindung ist weiterhin eine Vorrichtung zur Durchführung des erfindungsgemäßen Verfahrens.

Das folgende Beispiel dient zur Erläuterung der Erfindung.

## BEISPIEL 1

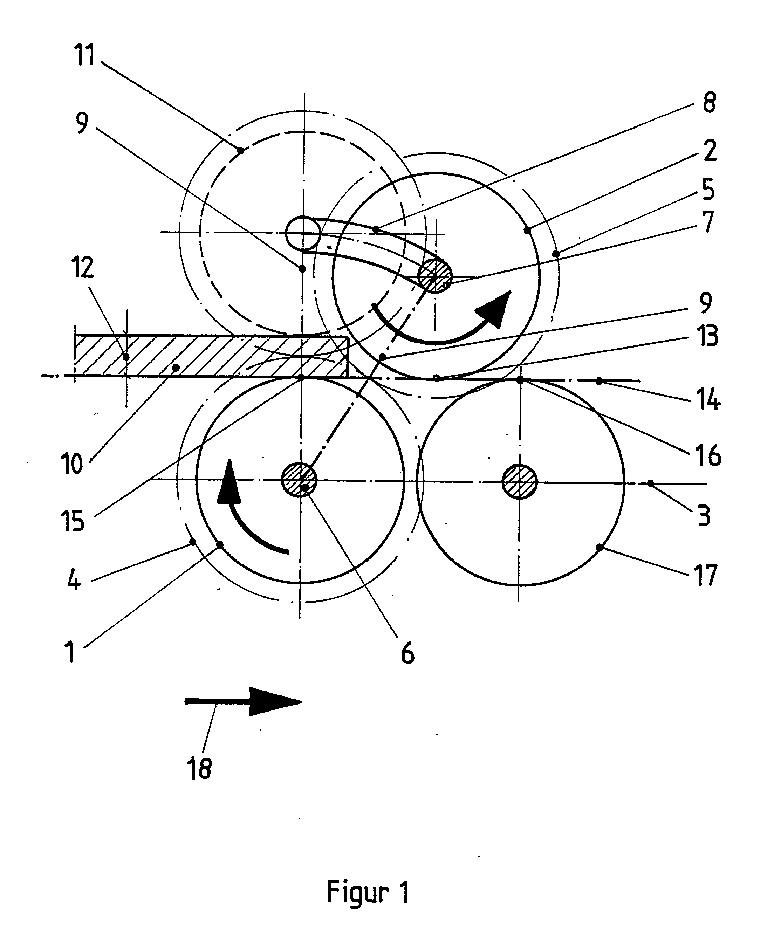

In Figur 1 ist eine untere Rolle 1 und eine obere Rolle 2 dargestellt. Die untere Rolle 1 wird von einer nicht dargestellten, in der Ebene der Mittellinie 3 liegenden Antriebswelle über - ebenfalls nicht dargestellte - Kegelräder angetrieben. Der Antrieb der oberen Rolle 2 erfolgt über eine Geradeverzahnung mit den Teilkreisdurchmessern 4 und 5. Die Lagerung 6 der unteren Rolle 1 ist ortsunveränderlich. Die Lagerung 7 der oberen Rolle 2 jedoch kann innerhalb der Kulisse 8 ihre Lage verändern. Dabei ist jedoch die Kulisse 8 so gestaltet beziehungsweise angeordnet, daß der Abstand 9 der Lagerachsen 6 und 7 unverändert bleibt.

Werden plattenförmige Gegenstände, zum Beispiel eine Leiterplatte 10 zwischen der unteren Rolle 1 und der oberen Rolle 2 hindurchbewegt, nimmt die obere Rolle 2 eine Position 11 ein, bei der der Abstand zwischen den Außendurchmessern der Rollen 1 und 2 der Dicke 12 der Leiterplatte entspricht. Die obere Rolle 2 läuft dabei durch ihre Drehbewegung leicht auf die Leiterplatte 10 auf, wobei sich der Abstand 9 nicht verändert. Die Kulisse 8 ist so gestaltet, daß der tiefste Punkt 13 vom Außendurchmesser der Rolle 2 nicht, oder nur ganz wenig, tiefer liegen kann als die Verbindungslinie 14 der höchsten Punkte 15 und 16 der Rollen 1 und 17. Dadurch ist gewährleistet, daß sehr dünne Platten beim Durchlauf nicht deformiert werden.

Die Rolle 17 ist so nah wie möglich hinter, in Transportrichtung 18 der Leiterplatten 10 gesehen, der Rolle 1 angeordnet und stützt die Leiterplatte 10 gegen das Gewicht der oberen Rolle 2 zusätzlich ab.

## Ansprüche

1. Verfahren zum Transportieren von plattenförmigen Gegenständen, insbesondere Leiterplatten, zu deren Behandlung in Horizontal-Durchlaufanlagen, bei stark unterschiedlicher Dicke der Platten und einer Führung der Platten beim Durchlauf zwischen unteren und oberen Rollen, wobei die obere Rolle von der jeweils zugeordneten unteren Rolle aus über eine Geradeverzahnung angetrieben wird, dadurch gekennzeichnet, das die Verzahnung zwischen den unteren und oberen Rollen mit einem unveränderlichen Achsabstand ausgeführt ist, wobei die Lagerung der oberen Rolle mit deren Zahnrad in einer Kulisse in Form eines Kreisbogens geführt ist, der Mittelpunkt des Kreisbogens im Lager-Mittelpunkt des unteren Zahnrades liegt und der Radius des Kreisbogens dem Achsabstand der Verzahnung entspricht.

2. Verfahren nach Anspruch 1, dadurch gekennzeichnet, daß die Kulisse so ausgebildet ist, daß die obere und untere Rolle nicht ganz senkrecht übereinander gelangen können, wodurch die obere Rolle durch ihr Eigengewicht bestrebt ist, immer ihre tiefste Stellung einzunehmen.

3. Verfahren nach Anspruch 1, dadurch gekennzeichnet, daß die obere Rolle durch Federelemente ständig in Richtung ihrer tiefsten Stellung gezogen wird.

4. Verfahren nach Anspruch 1, dadurch gekennzeichnet, daß die Verzahnung zwischen unterer und oberer Rolle an deren einem Ende angebracht ist.

5. Verfahren nach Anspruch 1, dadurch gekennzeichnet, daß die Verzahnung zwischen unterer und oberer Rolle an deren beiden Enden angebracht ist.

6. Verfahren nach Anspruch 1, dadurch gekennzeichnet, daß in Förderrichtung der Leiterplatten gesehen, unmittelbar hinter dem miteinander verzahnten Walzenpaar, eine einzelne untere Rolle angeordnet ist.

7. Verfahren nach Anspruch 1, dadurch gekennzeichnet, daß das Lager der oberen Rolle in einem Schwenkhebel angeordnet ist, dessen Drehpunkt identisch ist mit dem Mittelpunkt des Lagers der unteren Rolle.

8. Anordnung zur Durchführung des Verfahrens nach Ansprüchen 1 bis 7.

Figur 1